(19) Europäisches Patentamt
European Patent Office
Office européen des brevets

(11) **EP 2 982 035 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **13802605.9**

(22) Anmeldetag: **06.12.2013**

(51) Int Cl.:
***H02P 1/04*** *(2006.01)*

(86) Internationale Anmeldenummer:
**PCT/EP2013/075810**

(87) Internationale Veröffentlichungsnummer:
**WO 2014/161614 (09.10.2014 Gazette 2014/41)**

(54) **VERFAHREN ZUM ANLAUFEN EINES DREHZAHLVERÄNDERLICHEN ELEKTROMOTORS**

METHOD FOR STARTING A VARIABLE-SPEED ELECTRIC MOTOR

PROCÉDÉ DE MISE EN MARCHE D'UN MOTEUR ÉLECTRIQUE À VITESSE VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2013 DE 102013206029**

(43) Veröffentlichungstag der Anmeldung:
**10.02.2016 Patentblatt 2016/06**

(73) Patentinhaber: **KSB SE & Co. KGaA**
**67227 Frankenthal (DE)**

(72) Erfinder:
• GONTERMANN, Daniel
  67227 Frankenthal (DE)
• SCHAAB, Jochen
  67227 Frankenthal (DE)
• SCHULLERER, Joachim
  67227 Frankenthal (DE)
• OESTERLE, Manfred
  67227 Frankenthal (DE)

(56) Entgegenhaltungen:
DE-A1- 10 133 861    DE-A1-102007 061 917

**Beschreibung**

Die vorliegende Erfindung bezieht sich auf ein Verfahren zum Anlaufen eines drehzahlveränderlichen Elektromotors, insbesondere eines Synchron- oder Asynchronmotors, sowie auf einen Elektromotor, insbesondere Synchron- oder Asynchronmotor, selbst.

Diverse Antriebe bzw. Maschinen besitzen einen Elektromotor, der die für die Funktion der Maschine benötigte Antriebsarbeit verrichtet. Unter gewissen Betriebsbedingungen kann aufgrund von Verschmutzungen eine Blockade des Antriebstranges auftreten. Diese Problematik stellt sich oftmals bei elektrisch betriebenen Pumpsystemen ein, da die geförderten Volumenströme Verschmutzungen in das Pump- bzw. Motorgehäuse spülen, die sodann zu einer Blockade der Pumpen- bzw. Motorwelle führen können.

Oftmals werden blockierte Pumpen oder Antriebe zerlegt und gereinigt, um den Weiterbetrieb sicherzustellen. Eine weitere Möglichkeit besteht darin, durch mechanische Krafteinwirkung auf die Welle des Motors oder der Arbeitsmaschine die Blockierung zu lösen bzw. das erhöhte Anlaufdrehmoment zu verringern. Beispielsweise wird in der DE 3210761 C1 empfohlen, bei einer Wellenblockade mit einem Schraubenzieher die Welle loszubrechen. Die DE 101 33 861 A1 offenbart ein Antriebssystem für Pumpen mit einem Anlaufverfahren, bei welchem beginnend mit einem niedrigen Drehmoment, welches unter dem Losbrechmoment liegt, darauffolgend jeweils höhere Drehmomente in wechselnden Richtungen vorgegeben werden.

In der EP 0771065 B1 wird ein Verfahren zu Erkennung einer Blockade eines Pumpenlaufrades bzw. der Welle eines beliebigen Antriebs vorgestellt. Sofern der benötigte Anlaufstrom des Motors einen festen Grenzwert überschreitet, wird eine Blockade der Welle angenommen. In diesem Fall soll der Antrieb mit einem maximalen Anlaufmoment in wechselnder Drehrichtung, d. h. mit einem maximalen positiven bzw. negativen Anlaufmoment beaufschlagt werden. Nachteilig an diesem Verfahren ist jedoch, dass der Antrieb kurzzeitig in die verkehrte Laufrichtung loslaufen kann, sofern die Blockade während des Anlegens eines negativen Anlaufmomentes überwunden wird.

Aufgabe der vorliegenden Erfindung ist es daher, bekannte Verfahren zum Anlaufen eines Elektromotors weiterzuentwickeln, die die oben genannte Problematik zu überwinden wissen.

Diese Aufgabe wird durch ein Verfahren gemäß den Merkmalen des Anspruchs 1 gelöst. Vorteilhafte Ausführungen des Verfahrens sind Gegenstand der sich an den Hauptanspruch anschließenden abhängigen Unteransprüche.

Gemäß Anspruch 1 wird also ein Verfahren zum Anlaufen eines drehzahlveränderlichen Elektromotors vorgeschlagen. Die konkrete Ausführung des Elektromotors ist beliebig, so kann dieser beispielsweise als ein- oder mehrphasiger Synchronmotor, insbesondere Synchronreluktanzmotor, ausgeführt sein. Einzige Bedingung ist die Integration eines Verstellmittels zur Einstellung der Motordrehzahl. Beispielsweise lässt sich die Drehzahl mittels eines Frequenzumrichters steuern. Daher lässt sich das Verfahren ebenso auf Asynchronmotoren mit Frequenzumrichter ausführen.

Das erfindungsgemäße Verfahren sieht in einem ersten Verfahrensschritt vor, eine Blockade der Motorwelle aufgrund bestimmter Betriebsbedingungen zuverlässig zu erkennen. Sofern eine Blockade der Motorwelle festgestellt wird, soll diese mit einem positiven Drehmoment angeregt werden. Unter einem positiven Drehmoment ist dabei jenes Drehmoment zu verstehen, das eine Drehbewegung in der gewünschten Motorrichtung bewirkt. Dem gegenüber ist unter einem negativen Drehmoment die Drehbewegung der Welle in Rückwärtsrichtung zu verstehen.

Erfindungsgemäß ist nunmehr vorgesehen, dass das angelegte positive Drehmoment kontinuierliche Änderungen erfährt, wobei diese kontinuierlichen Änderungen mit unterschiedlicher Frequenz erfolgen, um ein Losbrechen der Blockade zu erreichen. Erfindungswesentlich ist die stetige Anlegung eines positiven Drehmoments. Durch die kontinuierliche frequenzvariable Änderung des Drehmoments kann durch Ausnutzung sogenannter Resonanzeffekte ein Losbrechen der festgesetzten Antriebswelle erzielt werden. Hierdurch wird gegenüber den aus dem Stand der Technik bekannten Verfahren vermieden, dass bei einem Losbrechen der Rotorwelle der Motor unter gewissen Umständen in die verkehrte Richtung losläuft.

Der Betrieb des Elektromotors, insbesondere des Synchronmotors, wird durch die anliegende Spulenspannung bzw. den Spulenstrom gesteuert, der durch die Motorwicklungen des Motorständers fließt. In Abhängigkeit der verwendeten Phasenanzahl müssen entsprechend mehrere Spulenströme durch Änderung der Spulenspannung geregelt werden. Bevorzugt können die einzelnen Spulenströme in ein Rotorkoordinatensystem mit d- und q-Achse transferiert werden. Die d-Achse erstreckt sich in Richtung des Feldes, das von dem Rotor selbst erzeugt wird. Die q-Achse kreuzt senkrecht die d-Achse in der Ebene der Rotordrehung.

Gemäß einer besonders bevorzugten Ausführungsvariante der Erfindung wird die Anregung der Motorwelle mit einem positiven Drehmoment über die Stromkomponente $I_q$ entlang der q-Achse geregelt.

Besonders bevorzugt wird der Elektromotor, insbesondere ein Synchronmotor, auf einen Konstantwert für die Stromkomponente $I_q$ geregelt. Idealerweise wird als Konstantwert der halbe Wert $I_q/2$ des maximalen Stroms $I_q$ entlang der q-Achse verwendet. Dieser Konstantwert wird sodann mit einer Schwingung, bevorzugt einer periodischen Schwingung, überlagert, um eine kontinuierliche Änderung des positiven Drehmomentes zum Losbrechen der Blockade zu erreichen. Die Amplitude wird dabei so gewählt, dass stets ein positives Drehmoment an der Motorwelle anliegt.

Als geeignete Schwingungsfunktionen, insbesondere periodische Schwingungsfunktion, erweist sich eine Sinus- bzw. Kosinusfunktion oder jede andere periodische Schwingung.

Zur Erreichung eines Resonanzeffektes, der ein Losbrechen des festgesetzten Rotors beschleunigen kann, wird die Frequenz der überlagernden Schwingung vorzugsweise variiert. Demzufolge wird nicht nur die Änderung des Drehmomentes variiert, sondern es wird zudem die Geschwindigkeit der Änderung variiert. Dies führt zu einer optimierten Losrüttelfunktion, die aufbauend auf Resonanzeffekten eine effiziente und schnelle Aufhebung der Blockade bewirkt.

Idealerweise wird die Frequenz innerhalb eines Frequenzkorridors mit minimaler und maximaler Frequenz variiert. Die Variation kann in diskreten Schritten oder auch in kontinuierlichen Schritten erfolgen.

Es besteht die Möglichkeit, den Konstantwert der Stromkomponente $I_q$ mit einer Schwingung zu überlagern, die einen veränderlichen Amplitudenverlauf aufweist. Die Verwendung einer Schwingung mit konstanter Amplitude wird jedoch bevorzugt. Idealerweise ist die Amplitude der verwendeten Überlagerungsschwingung kleiner oder gleich dem halben Maximalwert der Stromkomponente $I_q$. Folglich ändert sich die Wirkrichtung der Stromkomponente nicht, so dass stets ein positives Drehmoment anliegt.

Sobald eine Lösung der Blockade erkannt wird, ist es sinnvoll, die Amplitude der überlagernden Schwingung auf null zu reduzieren. In diesem Fall wird der Motorbetrieb vorab mit dem konstanten halben Maximalwert der Stromkomponente $I_q$ fortgesetzt und bei Bedarf schrittweise erhöht, bis sich die gewünschte Motordrehzahl einstellt.

Das erfindungsgemäße Verfahren eignet sich insbesondere für den Einsatz in Synchronmotoren, die eine sensorlose Messung des elektrischen Winkels vorsehen, insbesondere Synchronreluktanzmotoren. Unter dem elektrischen Winkel ist hierbei der Winkel des magnetischen Feldverlaufs des Rotors, d. h. der d-Achse gegenüber der anregenden Spulenphase zu verstehen. Der elektrische Winkel wird regelmäßig auf Grundlage der Stromkomponenten entlang der q- sowie d-Achse berechnet.

Unter Verwendung des berechneten elektrischen Winkels lässt sich in einer besonders bevorzugten Ausgestaltung der Erfindung auf eine mögliche Blockade der Rotorwelle schließen. Insbesondere wird von der Steuerung eine Blockade der Rotorwelle angenommen, sofern die Differenz der Winkellage eines aktuellen Abtastschritts und eines vorherigen Abtastschritts einen bestimmten Grenzwert nicht überschreitet. Beispielsweise zeigt die Winkeländerung zwischen zwei Abtastzeitpunkten keinen Unterschied bzw. nur einen vernachlässigbar kleinen Differenzwert. Erfährt die Synchronmaschine keine Änderung des elektrischen Winkels, so kann auf eine festgesetzte Rotorwelle aufgrund der ausbleibenden Drehbewegung geschlossen werden. Dies kann ein erstes notwendiges Kriterium der Blockade bilden. Als zweites notwendiges Kriterium kann zusätzlich die Entwicklung der Stromkomponente $I_q$ herangezogen werden.

Sind beide Kriterien gleichzeitig erfüllt, so wird eine Blockade erkannt. Sofern die berechnete Stromkomponente $I_q$ einen maximalen Wert erreicht oder überschreitet und die Winkeländerung unterhalb einer Grenzschwelle liegt, soll auf eine festgesetzte Rotorwelle geschlossen werden.

Die Erfindung betrifft des Weiteren einen Elektromotor, insbesondere einen Synchronmotor oder einen Asynchronmotor, mit einer Motorsteuerung zur Durchführung des erfindungsgemäßen Verfahrens bzw. zur Durchführung einer der vorteilhaften Ausführungsvarianten des erfindungsgemäßen Verfahrens. Der Elektromotor, insbesondere Synchronmotor oder Asynchronmotor, ist mit einem Frequenzumrichter ausgestattet, der eine Drehzahländerung während des Motorbetriebs zulässt. Ferner ist der Elektromotor sinnvollerweise als sensorloser Motor ausgeführt, der den aktuellen Winkel des Rotors zur Optimierung der Spulenspannung berechnet. Zweckmäßig ist der Elektromotor als ein Synchronreluktanzmotor ausgebildet. Die Vorteile und Eigenschaften des Elektromotors entsprechen offensichtlich denen des erfindungsgemäßen Verfahrens bzw. einer vorteilhaften Ausgestaltung des Verfahrens, weshalb an dieser Stelle auf eine wiederholende Beschreibung verzichtet wird.

Ferner betrifft die Erfindung eine Pumpe, insbesondere Kreiselpumpe, die über einen Elektromotor gemäß der vorliegenden Erfindung angetrieben wird. Offensichtlich entsprechen die Vorteile und Eigenschaften der erfindungsgemäßen Pumpe denen des erfindungsgemäßen Elektromotors bzw. einer vorteilhaften Ausgestaltung des Elektromotors.

Weitere Vorteile und Eigenschaften der Erfindung sollen im Folgenden anhand einer Zeichnung näher erläutert werden.

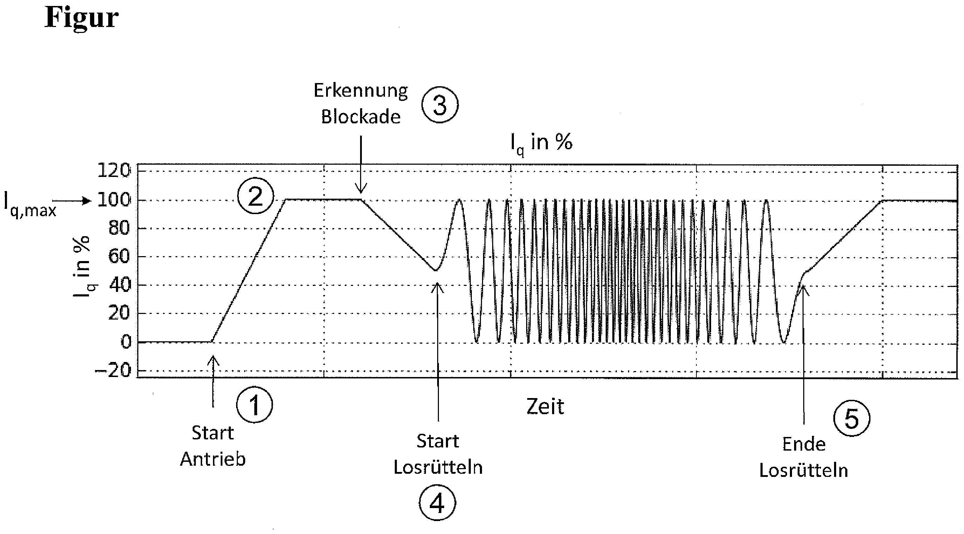

Die einzige Figur zeigt ein Verlaufsdiagramm der Stromkomponente $I_q$ einer Synchronmaschine entlang der q-Achse gegenüber der Zeit. Wie bereits vorangehend beschrieben worden ist, stellt die Stromkomponente $I_q$ den in ein Rotorkoordinatensystem mit den Achsen q und d transferierten Spulenstrom dar. Die Stromkomponente $I_q$ kann daher als momentenbildender Strom interpretiert werden und ist daher mit dem an der Rotorwelle anliegenden Drehmoment gleichzusetzen.

Für die Variation des anliegenden Drehmomentes umfasst die Synchronmaschine eine Steuereinheit, die unter Einsatz eines Frequenzumrichters einen stromgeregelten Betrieb des dreiphasigen Synchronmotors ermöglicht. Mittels des Frequenzumrichters lässt sich die Drehzahl des Motors präzise einstellen.

Bei dieser Antriebstechnologie wird die Winkellage des Rotors bestimmt, um das magnetische Feld des Stators entsprechend ausrichten zu können, wodurch sich optimale Laufeigenschaften des Rotors ergeben. Allerdings umfasst der Synchronmotor keine Sensorik zur unmittelbaren Erfassung des aktuellen elektrischen Winkels, dieser lässt sich jedoch anhand der gemessenen Spulenströme berechnen.

Basierend auf dieser sensorlos bestimmten Winkellage kann außerdem zuverlässig eine Blockade mit Hilfe der folgenden Bedingung erkannt werden

$$\left( I_q \geq I_{q,\max} \right) \text{ UND } \left( \varphi_{alt} - \varphi_{neu} < \Delta\varphi \right),$$

wobei $I_q$ die Stromkomponente entlang der q-Achse des Rotorkoordinatensystems, $I_{q,\max}$ die maximal zulässige Stromkomponente entlang der q-Achse, $\varphi_{neu}$ die aktuelle Winkellage des Rotors im aktuellen Abtastschritt, $\varphi_{alt}$ die Winkellage des vorherigen Abtastschrittes und $\Delta\varphi$ einen Schwellwert der Winkellage darstellt.

Sofern diese Bedingung einmalig beim Anlaufen des Antriebs oder über eine gewisse Zeitspanne dauerhaft oder mehrheitlich erfüllt ist, wird von der Steuerung des Synchronmotors eine Blockade der Antriebswelle angenommen.

In diesem Fall wird die Losrüttelfunktion mit breitbandiger Anregung gestartet. Hierzu wird die Stromkomponente entlang der q-Achse auf die Hälfte ihres Maximalwertes reduziert. Dieser Vorgang ist in der Diagrammdarstellung dargestellt. Im Zeitpunkt 1 wird der Betrieb des Synchronmotors gestartet, wodurch ein Spulenstrom bzw. ein Strom entlang der q-Achse fliesst. Zum Zeitpunkt 2 erreicht der Wert der Stromkomponente $I_q$ den maximalen Strom $I_{q,\max}$ entlang der q-Achse. Ab diesem Zeitpunkt ist die oben genannte Bedingung erfüllt. Für die Detektion einer Blockade muss die Bedingung jedoch mindestens über den Zeitraum vom Zeitpunkt 2 bis zum Zeitpunkt 3 erfüllt sein.

Im Zeitpunkt 3 wird sodann die Stromkomponente entlang der q-Achse auf den halben Maximalwert, d.h. 50% halbiert. Ferner wird im Zeitpunkt 4 dem Konstantanteil $I_{q,\max}/2$ eine periodische Schwingung mit konstanter Amplitude überlagert. Im Ausführungsbeispiel der Figur wird hier eine sinusförmige Schwingung überlagert, deren Amplitude dem halbierten Maximalwert $I_{q,\max}/2$ der Stromkomponente $I_q$ entspricht. Folglich wird durch die überlagerte Schwingung ein sinusförmiger Verlauf der Stromkomponente $I_q$ erzeugt, der stets positive Werte annimmt.

Ein zuverlässiges Losrütteln wird erreicht, indem die Frequenz der sinusförmigen Schwingung zwischen einer minimalen Frequenz $f_{min}$ und einer maximalen Frequenz $f_{max}$ kontinuierlich verändert wird. Dadurch wird der Antriebsstrang bei verschiedenen Frequenzen, d.h. breitbandig angeregt, wodurch gezielt Resonanzeffekte hervorgerufen werden und ein Losbrechen der festgesetzten Antriebswelle erreicht wird.

Sobald die Bedingung der Blockade nicht mehr erfüllt ist, wird wie im Zeitpunkt 5 dargestellt, die Amplitude der Antriebsfrequenz rasch auf null reduziert und der Antrieb läuft in der gewollten Richtung los. Ab diesem Zeitpunkt wird kontinuierlich die Solldrehzahl der Synchronmaschine erhöht, wodurch auch die Stromkomponente $I_q$ in Richtung ihres Maximalwertes $I_{q,\max}$ zulegt.

## Patentansprüche

1. Verfahren zum Anlaufen eines drehzahlveränderlichen Elektromotors, insbesondere Synchron- oder Asynchronmotors, mit den Verfahrensschritten:

   a. Erkennen einer Blockade der Motorwelle,
   b. Anregen der Motorwelle mit einem stets positiven Drehmoment
   c. Kontinuierliche Änderung des stets positiven Drehmoments durch kontinuierliche Veränderung der Frequenz eines Frequenzumrichters, um ein Losbrechen der Blockade zu erreichen.

2. Verfahren nach Anspruch 1, **dadurch gekennzeichnet, dass** die Anregung über die Stromkomponente $I_q$ entlang der q-Achse gesteuert wird.

3. Verfahren nach Anspruch 1, **dadurch gekennzeichnet, dass** der Konstantwert der Stromkomponente $I_q$ auf den halben Maximalwert $I_{q,\max}/2$ begrenzt und mit einer Schwingung, bevorzugt einer periodischen Schwingung, besonders bevorzugt einer Sinusschwingung, überlagert wird.

4. Verfahren nach Anspruch 3, **dadurch gekennzeichnet, dass** die Frequenz der Schwingung variiert wird.

5. Verfahren nach Anspruch 4, **dadurch gekennzeichnet, dass** die Frequenz innerhalb eines Frequenzkorridors mit minimaler und maximaler Frequenz kontinuierlich variiert wird.

6. Verfahren nach einem der Ansprüche 3 bis 5, **dadurch gekennzeichnet, dass** die Amplitude der Schwingung konstant ist und bevorzugt kleiner oder gleich dem halben Maximalwert $I_{q,\max}/2$ der Stromkomponente $I_q$ ist.

7. Verfahren nach einem der vorhergehenden Ansprüche, **dadurch gekennzeichnet, dass** die Amplitude der Schwingung auf Null reduziert wird sobald eine Aufhebung der Blockade erkannt wird.

8. Verfahren nach einem der vorhergehenden Ansprüche, **dadurch gekennzeichnet, dass** der Elektromotor, insbesondere Synchron- oder Asynchronmotor, den elektrischen Winkel sensorlos bestimmt.

9. Verfahren nach einem der vorhergehenden Ansprüche, **dadurch gekennzeichnet, dass** eine Blockade erkannt wird, sobald der Steuerstrom, d.h. der Spulenstrom oder die Stromkomponente $I_q$ in q-Richtung einen Maximalwert erreicht oder überschreitet und/oder die Differenz der Winkellagen $\varphi_{neu}$, $\varphi_{alt}$ zwei aufeinander folgender Abtastschritte einen definierten Schwellwert $\Delta\varphi$ nicht überschreitet.

10. Elektromotor, insbesondere Synchron- oder Asynchronmotor, mit einer Motorsteuerung und einem Frequenzumrichter zur Durchführung des Verfahrens nach einem der vorhergehenden Ansprüche.

11. Pumpe, insbesondere Kreiselpumpe, angetrieben durch einen Elektromotor gemäß Anspruch 10.


**Claims**

1. Method for starting a variable-speed electric motor, in particular a synchronous or asynchronous motor, having the following method steps:

    a. identifying a blockage of the motor shaft,
    b. exciting the motor shaft with an always positive torque,
    c. continuously changing the always positive torque by continuously changing the frequency of a frequency converter in order to achieve breaking-free of the blockage.

2. Method according to Claim 1, **characterized in that** the excitation is controlled via the current component $I_q$ along the q axis.

3. Method according to Claim 1, **characterized in that** the constant value of the current component $I_q$ is limited to half the maximum value $I_{q,max}/2$ and has an oscillation, preferably a periodic oscillation, particularly preferably a sinusoidal oscillation, superimposed on it.

4. Method according to Claim 3, **characterized in that** the frequency of the oscillation is varied.

5. Method according to Claim 4, **characterized in that** the frequency is varied continuously within a frequency corridor with a minimum and a maximum frequency.

6. Method according to one of Claims 3 to 5, **characterized in that** the amplitude of the oscillation is constant and is preferably less than or equal to half the maximum value $I_{q,max}/2$ with the current component $I_q$.

7. Method according to one of the preceding claims, **characterized in that** the amplitude of the oscillation is reduced to zero as soon as elimination of the blockage is identified.

8. Method according to one of the preceding claims, **characterized in that** the electric motor, in particular synchronous or asynchronous motor, determines the electrical angle without the use of a sensor.

9. Method according to one of the preceding claims, **characterized in that** a blockage is identified as soon as the control current, i.e. the coil current or the current component $I_q$ in the q direction reaches or exceeds a maximum value and/or the difference in the angular positions $\phi_{new}$, $\phi_{old}$ of two successive sampling steps does not exceed a defined threshold value $\Delta\phi$.

10. Electric motor, in particular synchronous or asynchronous motor, comprising a motor controller and a frequency converter for implementing the method according to one of the preceding claims.

11. Pump, in particular centrifugal pump, driven by an electric motor according to Claim 10.


**Revendications**

1. Procédé de démarrage d'un moteur électrique à vitesse variable, en particulier d'un moteur synchrone ou asynchrone, comprenant les étapes consistant à :

    a. détecter un blocage de l'arbre du moteur,
    b. solliciter l'arbre du moteur avec un couple toujours positif,
    c. modifier en continu le couple constamment positif par une modification continue de la fréquence d'un convertisseur de fréquence afin de libérer le blocage.

2. Procédé selon la revendication 1, **caractérisé en ce que** la sollicitation est commandée par la composante de courant $I_q$ le long de l'axe q.

3. Procédé selon la revendication 1, **caractérisé en ce que** la valeur constante de la composante de courant $I_q$ est limitée à la moitié de la valeur maximale $I_{q,max}/2$ et **en ce qu'**une oscillation, de préférence une oscillation périodique, et de manière particulièrement préférable, une oscillation sinusoïdale, est superposée à celle-ci.

4. Procédé selon la revendication 3, **caractérisé en ce que** la fréquence de l'oscillation est amenée à varier.

5. Procédé selon la revendication 4, **caractérisé en ce que** la fréquence est amenée à varier en continu à l'intérieur d'une plage de fréquences ayant des fréquences minimale et maximale.

**6.** Procédé selon l'une des revendications 3 à 5, **caractérisé en ce que** l'amplitude de l'oscillation est constante et de préférence inférieure ou égale à la moitié de la valeur maximale $I_{q,max}/2$ de la composante de courant $I_q$.

**7.** Procédé selon l'une des revendications précédentes, **caractérisé en ce que** l'amplitude de l'oscillation est réduite à zéro dès qu'une suppression du blocage est détectée.

**8.** Procédé selon l'une des revendications précédentes, **caractérisé en ce que** le moteur électrique, en particulier le moteur synchrone ou asynchrone, détermine l'angle électrique sans capteurs.

**9.** Procédé selon l'une des revendications précédentes, **caractérisé en ce qu'**un blocage est détecté dès que le courant de commande, c'est-à-dire le courant de bobine ou la composante de courant $I_q$ dans la direction q atteint ou dépasse une valeur maximale et/ou dès que la différence des positions angulaires $\varphi_{neu}$, $\varphi_{alt}$ de deux pas d'échantillonnage consécutifs ne dépasse pas une valeur de seuil définie $\Delta\varphi$.

**10.** Moteur électrique, en particulier moteur synchrone ou asynchrone, comportant une unité de commande de moteur et un convertisseur de fréquence pour mettre en oeuvre le procédé selon l'une des revendications précédentes.

**11.** Pompe, en particulier pompe centrifuge, entraînée par un moteur électrique selon la revendication 10.

# Figur

EP 2 982 035 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3210761 C1
- DE 10133861 A1

- EP 0771065 B1